(19) Europäisches Patentamt
European Patent Office
Office européen des brevets

(11) **EP 1 971 841 B1**

(12) **FASCICULE DE BREVET EUROPEEN**

(45) Date de publication et mention de la délivrance du brevet:
**15.08.2012 Bulletin 2012/33**

(51) Int Cl.:
*G01L 5/22* *(2006.01)*   *G01L 3/10* *(2006.01)*

(21) Numéro de dépôt: **07717710.3**

(86) Numéro de dépôt international:
**PCT/FR2007/050620**

(22) Date de dépôt: **08.01.2007**

(87) Numéro de publication internationale:
**WO 2007/077406 (12.07.2007 Gazette 2007/28)**

(54) **CAPTEUR DE POSITION MAGNETIQUE DE FAIBLE COURSE, EN PARTICULIER DESTINE A LA MESURE DE TORSION D'UNE COLONNE DE DIRECTION**

MAGNETISCHER KURZHUBPOSITIONSSENSOR, IM BESONDEREN ZUR MESSUNG VON LENKSÄULENDREHUNGEN

SHORT STROKE MAGNETIC POSITION SENSOR, IN PARTICULAR FOR MEASURING A STEERING COLUMN TWIST

(84) Etats contractants désignés:
**CH DE FR LI**

(30) Priorité: **06.01.2006 FR 0600119**

(43) Date de publication de la demande:
**24.09.2008 Bulletin 2008/39**

(73) Titulaire: **Moving Magnet Technologies M.M.T. 25000 Besançon (FR)**

(72) Inventeurs:
• **MASSON, Gérald F-25000 Besançon (FR)**

• **BIWERSI, Stéphane F-25000 Besançon (FR)**

(74) Mandataire: **Breesé, Pierre Fidal Innovation 32, place Ronde 92035 Paris la Defense cedex (FR)**

(56) Documents cités:

| | |
|---|---|
| DE-A1- 10 222 118 | DE-U1- 20 305 732 |
| FR-A- 2 872 896 | FR-A1- 2 845 472 |
| GB-A- 2 379 277 | US-A- 4 984 474 |
| US-A- 4 998 084 | US-A1- 2003 233 889 |

## Description

La présente invention concerne le domaine des capteurs de position, et plus particulièrement les capteurs de position destinés à la mesure de la torsion d'une colonne de direction, sans que cette application ne soit exclusive.

On connaît dans l'état de la technique la demande de brevet français FR04/07718 décrivant un capteur de position, constitué par une première structure rotorique comprenant une pluralité d'aimants fixés sur une culasse, une seconde structure magnétique statorique comprenant deux couronnes présentant une pluralité de dents axiales imbriquées et une troisième structure collectrice fixe constituée de deux portions de disque prolongées de branches coudées se refermant pour former un entrefer de mesure où est placé un élément magnéto-sensible. La rotation relative des deux premières structures génère une variation de flux, dans l'entrefer créé au niveau de la troisième structure collectrice. Le capteur se caractérise par une structure statorique répondant à un dimensionnement précis de la géométrie des dents de stator de manière à améliorer la sensibilité du capteur, par des structures collectrices permettant d'assurer une perméance constante à la circulation du flux axial entre les stators et les collecteurs et par une optimisation de la taille et de la masse des différents éléments constitutifs.

Cependant, une telle structure présente un premier inconvénient lié au procédé d'assemblage notamment au regard de l'application principalement visée, à savoir la détection de la déformation d'une barre de torsion associée à une colonne de direction automobile. En effet, dans une telle application, la structure rotorique et la structure statorique sont chacune associées à une extrémité de la barre de torsion via deux sections d'arbres concentriques se faisant face axialement. L'imbrication entre la structure rotorique et la structure statorique pose alors problème car elle nécessite d'augmenter les entrefers radiaux de manière à prendre en compte les tolérances liées aux contraintes émanant des conditions d'assemblage et de fonctionnement dans la durée de vie du système, ce qui pénalise le capteur en termes de sensibilité.

Par ailleurs, une telle structure de capteur implique l'utilisation d'un aimant de type bague homogène et de préférence présentant une bonne anisotropie radiale, tout en ayant un coefficient de température faible (typiquement Samarium Cobalt). Or, si l'on souhaite utiliser des aimants de rémanence importante (typiquement aimant fritté de rémanence supérieure ou égale à 1 T) de manière à améliorer la variation de flux magnétique et donc la sensibilité du capteur, on est confrontés au prix important de ces matériaux lorsqu'ils sont conditionnés sous forme de bague ce qui les rend incompatibles avec l'application, ce qui fait que l'on utilise alors typiquement des bagues d'aimant de type Samarium Cobalt à liant plastique de rémanence de l'ordre de 0.5 à 0.6 T.

On connaît dans l'état de la technique le brevet américain US4984474. Ce brevet décrit notamment une configuration utilisant un aimant disque orienté axialement, permettant ainsi à la structure rotorique d'être séparée de la partie statorique par un entrefer axial, et ce sans imbrication de ces deux parties et aussi de rendre possible l'utilisation d'aimants frittés de haute rémanence, le conditionnement de ces aimants sous forme de disque étant beaucoup plus économique que sous forme de bague. Cependant, la structure de collecteurs associée à ce capteur n'est pas satisfaisante. En effet, elle décrit deux pièces s'étendant radialement depuis les stators, ce qui conduit à un encombrement radial trop important. Par ailleurs, aucune optimisation géométrique de la denture de manière à optimiser la sensibilité et les dimensions de ce capteur n'est décrite.

On connaît également le brevet DE20305732 décrivant un capteur angulaire comprenant deux stators en forme de disque, présentant chacun des dents s'étendant radialement, les dents de l'un des stators et les dents de l'autre stator étant respectivement de part et d'autre de l'aimant permanent en forme de disque. En l'absence de culasse de fermeture des flux, le signal détecté par la sonde de hall est faible, et sensible à des perturbations électromagnétiques. Par rapport, un tel capteur présente un encombrement important, tant radialement en raison des pièces de collecte de flux prolongeant radialement les stators, qu'en épaisseur, en raison de la configuration des dents disposées de part et d'autre de l'aimant.

Le brevet GB2379277 concerne un capteur angulaire formé par un aimant en forme de bague positionné à l'intérieur des stators, présentant chacun des dents imbriquées. Le problème qui se pose dans ce capteur est celui de la collecte des flux qui est réalisé par des prolongements radiaux des stators, avec une extension angulaire impliquant les fuites magnétiques qui dégradent les performances de la mesure.

Le brevet US2003/233889 décrit une structure de capteur comprenant des stators disposés de part et d'autre de l'aimant disque. Il en résulte un encombrement en hauteur préjudiciable. Par ailleurs, la collecte du flux est réalisée par des prolongements radiaux, imposant un encombrement radial préjudiciable.

On connaît encore des capteurs divulgués par le brevet allemand DE10222118, le brevet français FR12845472 décrivant d'autres solutions de tels capteurs.

On connaît également le brevet américain US4998084 décrivant un anneau magnétique multipolaire composite destiné à être monté sur un organe tournant dont chaque élément comporte des dents radiales réparties circonférentiellement, dont l'écartement est constant et qui forment des pôles magnétiques identiques, caractérisé par le fait qu'il est constitué par un ensemble de deux anneaux 4, 4' magnétiques élémentaires bipolaires axialement imbriqués dont les pôles magnétiques de l'un sont encastrés entre les pôles magnétiques de polarités inverses de l'autre.

Des dispositifs techniquement voisins sont décrits dans les brevets américains US3585550, US4555685 et US4835505.

L'état de la technique comprend donc un grand nombre de solutions, dont aucune ne résout le problème de la compacité et de la qualité du signal détecté par la sonde de Hall.

Ainsi, la présente invention se propose d'offrir une solution permettant un montage aisé, dans un encombrement réduit, avec une sensibilité optimisée et des pièces de tailles et de poids minimaux.

Pour cela, le nouveau capteur se compose de trois structures magnétiques distinctes : une première structure magnétique rotorique comprenant une pluralité d'aimants fixés sur une culasse et aimantés axialement; une seconde structure magnétique statorique comprenant deux couronnes concentriques présentant une pluralité de dents imbriquées et s'étendant radialement ; et une troisième structure collectrice fixe constituée de deux portions d'anneaux concentriques prolongées de branches annulaires coudées se refermant pour former un entrefer de mesure où est placé un élément magnéto-sensible.

La rotation relative des deux premières structures génère une variation de flux dans l'entrefer créé au niveau de la troisième structure collectrice.

La structure statorique se caractérise par un dimensionnement précis de la géométrie des dents de stator.

Cette règle de dimensionnement permet d'atteindre des meilleures performances en termes de niveau de signal, de linéarité, de sensibilité aux défauts géométriques et dimensionnels, grâce à la réduction de l'épaisseur des pièces magnétiques.

Selon son acception la plus générale, l'invention concerne un capteur de position, notamment destiné à la détection de la torsion d'une colonne de direction, constitué d'une première structure magnétique rotorique comprenant une pluralité d'aimants orientés axialement et constituant un ensemble de forme sensiblement discale, d'une seconde structure statorique comprenant deux couronnes concentriques prolongées de dents orientées radialement et imbriquées, et d'une troisième structure collectrice constituée de deux pièces de fermeture de flux dont l'une au moins est fixe, lesdites deux pièces de fermeture définissant au moins un entrefer dans lequel est placé au moins un élément magnéto-sensible, caractérisé en ce que la pluralité d'aimants et les couronnes dentées définissent entre elles une surface en regard indépendante de leur position radiale et angulaire relatives.

Avantageusement, les pièces de fermeture de flux et les couronnes de stators définissent entre elles une perméance magnétique indépendante de la position axiale et angulaire relative des deux structures.

De préférence, la structure collectrice comporte deux portions annulaires prévues apte à opérer un transfert de flux radial avec les couronnes de stators et au moins deux branches de fermeture permettant un décalage sensible, entre les faces en regard des couronnes de stators, et les faces délimitant l'entrefer de mesure, défini par la relation mathématique :

$$\frac{\text{Distance InterStators}}{\text{Entrefer de mesure}} \geq 4$$

où l'entrefer est défini par la distance minimale entre les faces des collecteurs et où la distance inter stators est définie par la distance entre les faces intérieures des couronnes des stators.

Avantageusement, les dents des stators respectent les critères géométriques suivants :

$$\frac{Lt \times Dt}{Li \times e} \geq 5$$

où :

- Lt désigne la longueur de dents de stators depuis l'extrémité jusqu'à la face intérieure de la couronne,
- Dt désigne la largeur moyenne des dents calculée comme étant la valeur moyenne des longueurs des arcs formés à l'extrémité et à la base de la dent,
- Li désigne l'imbrication des dents de stators c'est-à-dire l'étendue radiale sur laquelle les stators pénètrent l'un dans l'autre, et
- e désigne l'épaisseur de la feuille de métal constituant les dents de stators.

Selon une autre variante, la structure de collection de flux est réalisée au moyen de deux secteurs angulaires semi-annulaires situés radialement à l'extérieur des couronnes stators, qui permettent de conduire le flux jusqu'à au moins un entrefer de mesure comprenant au moins un élément magnéto-sensible.

Avantageusement, les dents de stators ont une largeur croissante de l'extrémité vers la base.

Selon un mode de réalisation particulier, la structure collectrice est composée de secteurs angulaires dont la largeur angulaire de l'arête intérieure vue de l'axe du capteur, est égale à un multiple du pas polaire angulaire de l'aimant.

Selon un autre mode de réalisation particulier, les pièces de fermeture du flux comportent des secteurs annulaires s'étendant sur 360°.

Avantageusement, l'entrefer de mesure est apte à recevoir un circuit intégré unique comportant deux éléments magnéto-sensibles distincts.

Selon une autre variante, l'aimant possède une largeur radiale sensiblement égale à la longueur des dents de stators.

Selon un premier mode de réalisation, ladite structure collectrice de flux comprend au moins un premier secteur angulaire interne, présentant une forme semi-tubulaire couplée magnétiquement avec la surface extérieure de la couronne interne et au moins un second secteur angulaire interne, présentant une forme semi-tubulaire couplée magnétiquement avec la surface interne de la couronne externe, l'un au moins desdits secteurs angulaire épousant sans frottement mécanique de la surface de la couronne adjacente, en ce qu'au moins un élément magnéto-sensible est couplé magnétiquement avec un prolongement dudit premier secteur angulaire et avec un prolongement dudit premier secteur angulaire.

Selon un autre mode de réalisation, ladite structure collectrice de flux comprend au moins un premier secteur angulaire interne, présentant une forme semi-tubulaire couplée magnétiquement avec la surface interne de la couronne interne et au moins un second secteur angulaire interne, présentant une forme semi-tubulaire couplée magnétiquement avec la surface externe de la couronne externe, l'un au moins desdits secteurs angulaire épousant sans frottement mécanique de la surface de la couronne adjacente, en ce qu'au moins un élément magnéto-sensible est couplé magnétiquement avec un prolongement dudit premier secteur angulaire et avec un prolongement dudit premier secteur angulaire.

Selon un autre mode de réalisation, chacun desdits secteurs angulaire est prolongé par une patte s'étendant perpendiculairement au plan radial, l'une des extrémités prolongeant le secteur angulaire correspondant respectivement et l'autre extrémité étant en regard d'une de faces de l'élément magnéto-sensible pour assurer un couplage magnétique.

De préférence, lesdites pattes sont coudées pour rapprocher les extrémités des faces opposées de l'élément magnéto-sensible.

Selon un mode de réalisation particulier, ladite structure collectrice de flux comprend au moins un premier secteur angulaire, présentant une forme semi-tubulaire couplée magnétiquement avec la surface interne d'une part et la surface externe d'autre part de la couronne mobile dans le canal semi-tubulaire formé dans ledit secteur angulaire.

Selon un autre mode de réalisation encore, le capteur comprend un ensemble d'au moins deux éléments magnéto-sensibles couplé avec au moins une structure collectrice de flux.

Les différents critères géométriques faisant l'objet de la présente invention vont être énoncés dans les paragraphes suivants.

D'une part, il a été montré que la longueur (selon le rayon) des dents de stators est un paramètre très important pour la régulation des flux dans ce type de structure magnétique.

En effet, l'imbrication, dans la direction radiale, des dents doit être limitée, sans quoi des flux de fuites apparaissent en bout de dent et induisent un niveau d'induction élevé, qui oblige à conserver une épaisseur de dent importante, laquelle induit à son tour des fuites entre les flancs des dents.

On notera que la largeur (circonférentielle) des dents de stators est également importante pour garantir une bonne linéarité du capteur. Cette largeur peut être définie par un angle qui doit être supérieur à la course visée pour le capteur.

De plus, il est intéressant de donner une forme trapézoïdale à ces dents de façon à augmenter la section disponible au passage du flux lorsque l'on se rapproche du coude de dent, puisque c'est à ce niveau que le flux est maximal.

Ajoutons que la surface active de la dent, c'est-à-dire la surface en regard de l'aimant, détermine la quantité de flux collecté et donc la sensibilité du capteur.

Cette dernière surface devra donc être choisie la plus grande possible tout en restant compatible avec les autres paramètres.

En fin de compte, nous pouvons donc établir que l'optimisation de la structure statorique passe par la minimisation des surfaces en vis-à-vis sur les flancs de dents de stators opposés pour limiter les fuites et par la maximisation des surfaces de dent en regard de l'aimant.

Ainsi, la règle de dimensionnement régissant le dimensionnement des stators peut être exprimée au travers d'un rapport des surfaces énoncées ci-dessus et défini par:

$$\frac{\text{Longueur dents} \times \text{Largeur moyenne dents}}{\text{Longueur imbrication des dents} \times \text{epaisseur dent}} \rangle \ 5$$

où la largeur moyenne des dents est définie comme étant la valeur moyenne des longueurs des arcs formés à l'extrémité et à la base des dents.

Au regard de la figure 6 du brevet américain US4984474 ce rapport est compris entre un et deux.

Pour les autres brevets connus, l'architecture du capteur est fondamentalement différente et ne permet pas d'évaluer ce critère.

En plus de ce dimensionnement de la géométrie des stators, la largeur radiale de l'aimant (c'est-à-dire la différence entre son rayon extérieur et son rayon intérieur) sera avantageusement choisie de manière à ce qu'elle permette de maintenir une surface de regard constante entre l'aimant et les dents même dans le cas où les couronnes dentées seront décentrées par rapport à l'aimant.

Ainsi, si « La » est la largeur radiale de l'aimant et « Lt » la longueur d'une dent selon le rayon, on pourra maintenir une surface en regard constante entre l'aimant et les dents pour des excentrations radiales inférieures ou égales à (Lt-La).

Cette largeur radiale peut aussi être optimisée par rapport à la longueur des dents en elle-même. En effet il apparaît que la sensibilité du capteur comparée au volume d'aimant atteint un optimum lorsque la largeur radiale de l'aimant correspond sensiblement à la longueur de la dent, laquelle est définie par la règle énoncée ci avant.

Lorsque ces règles sont appliquées, les flux de fuites entre dents sont limités et le niveau d'induction dans la dent est d'autant diminué. Il est alors possible de réduire l'épaisseur des dents, ce qui conduit à une meilleure sensibilité du capteur.

Hormis les critères précédents, relatifs à la géométrie des stators, les choix faits sur la configuration de la structure collectrice du capteur peuvent également apporter un gain sur la sensibilité du capteur et participer à la réduction des coûts.

Ainsi le capteur, selon l'invention, met en jeu des collecteurs qui se présentent comme des secteurs angulaires de cylindres fins, qui permettent une collection radiale du flux et qui font apparaître un coude bien marqué entre la surface d'échange de flux avec le stator et l'autre extrémité de la branche qui définit l'entrefer de mesure.

Cette configuration permet la réalisation de collecteurs de faible épaisseur, ce qui présente l'avantage de limiter les fuites apparaissant sur les tranches des branches de conduction du flux dans l'entrefer et permet ainsi d'augmenter la sensibilité du capteur.

Nous pouvons alors définir un second critère géométrique comme étant le rapport de l'entrefer de mesure par la distance axiale inter stators.

La nouvelle structure collectrice (30) telle que décrite dans ce brevet présente un entrefer de mesure petit comparé à la distance qui sépare les deux couronnes de stator et se caractérise par l'égalité suivante :

$$\frac{\text{Distance Inter Stators}}{\text{Hauteur Entrefer}} \geq 4$$

Suivant les différentes descriptions de l'art antérieur, ces pièces de collection peuvent présenter différentes formes ou position à l'égard des stators. Ils sont décrits comme se situant à l'intérieur des stators ou tout simplement à leur voisinage suivant les brevets existants.

Au-delà de la forme générale à donner aux collecteurs, nous proposons dans ce texte une solution nouvelle concernant la position des secteurs angulaires de collection par rapport aux stators, qui permet d'augmenter nettement la sensibilité du capteur.

Il s'agit de placer les collecteurs à l'extérieur des stators, de façon à les éloigner le plus possible l'un de l'autre tout en restant circonférenciellement regard des stators.

En effet, compte tenu des flux de fuites qui circulent entre les deux collecteurs, sans passer par l'entrefer de mesure, ce type de collection conduit à une amélioration de la sensibilité du capteur et participe à la définition du capteur optimisé revendiqué dans le présent brevet.

Par ailleurs, pour des raisons de fiabilité du capteur de couple, il peut être intéressant de prévoir deux éléments magnéto-sensibles pour permettre une redondance de la mesure en cas de défaut sur l'une des sondes.

Dans ce but, les collecteurs de flux peuvent présenter deux branches distinctes, permettant de créer deux entrefers de mesure en parallèle, dans lesquels sont placés les deux éléments magnéto-sensibles séparés.

Sachant qu'il existe aujourd'hui des composants électroniques plus évolués, contenant deux éléments magnéto-sensibles dans un seul circuit intégré, il est intéressant d'utiliser des collecteurs présentant chacun une seule branche de façon à bénéficier de la redondance de mesure tout en limitant la surface de l'entrefer de mesure.

En effet, la réduction de la surface en regard sur les deux collecteurs augmente le niveau de signal et donc la sensibilité du capteur.

Pour en revenir à la structure collectrice, il est important de noter que, selon une réalisation préférée, les secteurs annulaires de collection sont fixes alors que les stators sont mobiles en rotation et peuvent donc présenter un défaut de positionnement axial par rapport aux collecteurs. Dans une variante alternative, au moins l'un des secteurs angulaires est fixe, l'autre pouvant être solidaire de l'une des couronnes. Dans ce cas, le couplage de ce secteur annulaire solidaire de la couronne se fera par l'intermédiaire d'un secteur annulaire qui est libre en déplacement par rapport à l'élément magnéto-sensible.

Afin de garantir l'insensibilité du capteur à ce défaut de positionnements, les secteurs angulaires de collections doivent être prévus aptes à collecter un flux radial constant en dépit d'un décalage axial éventuel entre les deux structures statorique et collectrice.

Ceci est possible à condition que la perméance, c'est-à-dire la grandeur physique qui représente la facilité avec laquelle le flux peut traverser cet entrefer stator - collecteur, soit indépendante de la position axiale relative des deux structures.

Rappelons que la perméance relative à un entrefer entre deux pièces ferromagnétiques est définie par la relation suivante :

$$\Lambda = \frac{\mu \times S}{l}$$

où :

- $\mu$ désigne une constante caractéristique du matériau constituant l'entrefer et appelée permittivité magnétique,
- $S$ désigne l'aire de la surface sur laquelle les deux pièces sont en regard, et
- $l$ désigne la distance entre les deux surfaces en regard constituant l'entrefer.

Sachant que la distance $l$ n'est pas affectée par le décalage axial des deux structures statorique et collectrice, il suffit de garantir une surface en vis-à-vis constante pour conserver une perméance fixe.

Dans ce texte, nous revendiquons une forme particulière donnée aux couronnes de stators (23,24) et aux secteurs angulaires de collection (33,34), qui permet d'obtenir un recouvrement de l'une des parties sur l'autre, afin de rendre le capteur insensible au décalage axial entre les structures statorique (20) et collectrices (30).

Comme il sera expliqué plus en détail dans les paragraphes suivants, les secteurs angulaires pourront être dimensionnés avec une largeur radiale de disque plus faible que celle des couronnes de stators et inversement lorsque les stators font apparaître une couronne de collection bien délimitée, les secteurs angulaires seront prévus aptes à recouvrir ces dernières couronnes de stators.

Les différentes spécificités du capteur d'angle optimisé apparaîtront de façon plus claire au travers de la description des figures suivantes où :

• les figures 1 à 3 sont des vues faisant apparaître la partie rotorique et statorique du capteur sans la partie collectrice ;

• la figure 4 fait apparaître la partie rotorique, la partie statorique, la partie collectrice à l'intérieur et les sondes de Hall du capteur ;

• la figure 5 est une vue en perspective présentant un mode de réalisation particulier de la structure collectrice et basée sur une collection intérieure aux stators ;

• les figures 6 et 7 représentent une variante de la solution présentée en figures 4 et 5 avec une collection extérieure ;

• les figures 8 et 9 sont des vues en perspective faisant apparaître les critères géométriques revendiqués sur la partie statorique ;

• la figure 10 est une vue en perspective présentant un mode de réalisation particulier de la structure collectrice ;

• les figures 11 et 12 sont des vues à plat présentant un mode de réalisation particulier de la structure collectrice et basée sur une collection extérieure aux stators ;

- les figures 13 et 14 sont des vues perspectives présentant une variante de la structure collectrice avec collection intérieure et extérieure aux stators ;

- les figures 15 et 16 représentent une variante de la solution présentée en figures 13 et 14.

Description des figures

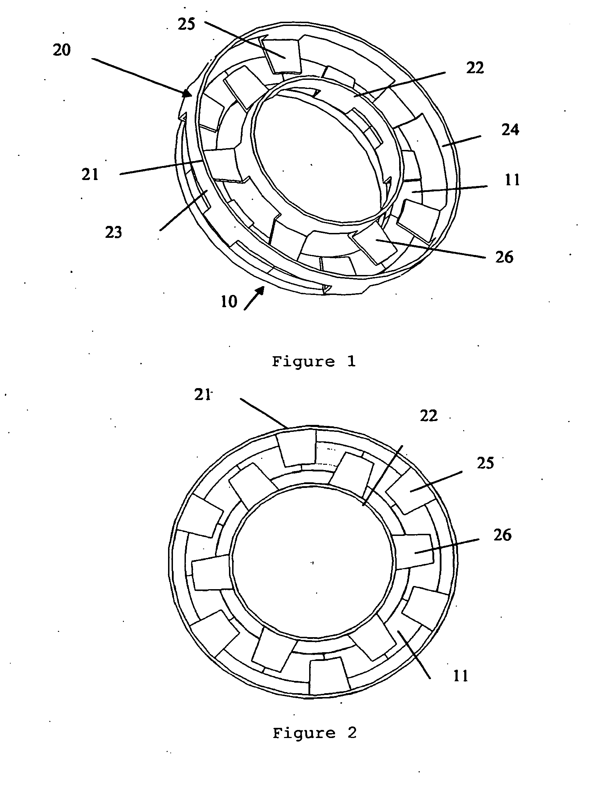

Les figures 1 à 3 sont des vues faisant apparaître la partie rotorique (10) et statorique (20) du capteur sans la partie collectrice. La partie rotorique (10) est constituée d'un aimant multipolaire aimanté axialement (11) c'est-à-dire dans son épaisseur, et d'une culasse (12) réalisée dans un matériau ferromagnétique pour faciliter le retour de flux et ainsi obtenir une meilleure sensibilité et linéarité du capteur. Dans le cas des figures 1 à 3, l'aimant présente 6 paires de pôles parfaitement adaptés à une mesure d'angle de torsion de +/-7°.

La partie statorique (20) est composée de deux stators (21) et (22). Chaque stator est composé d'un secteur annulaire (23) et (24) et de dents (25) et (26) s'imbriquant le moins possible radialement.

Le premier stator (21) est formé par une partie tubulaire qui sera solidaire de la colonne de direction. Cette partie tubulaire est prolongée par des dents (26). Chacune de ces dents présente un premier tronçon semi-tubulaire prolongeant la partie tubulaire, ce premier tronçon se prolongeant lui-même par une partie s'étendant radialement, vers l'extérieur, dans le plan transversal. Alternativement, le premier tronçon peut être plat. Les deux tronçons présentent la même largeur, au moins jusqu'à la zone de repliement.

Le deuxième stator (22) est formé par un partie tubulaire externe, coaxiale avec la partie tubulaire du premier stator (21) Elle présente donc un diamètre supérieur à celle de la partie tubulaire du premier stator (21) la différence entre les deux diamètres étant supérieure à deux fois la longueur de la partie transversale d'une dent.

Cette partie tubulaire est prolongée par des dents (25). Chacune de ces dents présente un premier tronçon semi-tubulaire, s'étendant en direction opposé à celui des premiers tronçons des dents (26) du premier stator. Ce premier tronçon se prolonge lui-même par une partie s'étendant radialement, vers l'intérieur, dans le plan transversal. Alternativement, le premier tronçon peut être plat. Les deux tronçons présentent la même largeur, au moins jusqu'à la zone de repliement.

Les tronçons radiaux des dents (25) et des dents (26) sont imbriqués, et coplanaires, dans le même plan transversal. L'aimant disque (11) est placé dans un plan parallèle au plan transversal dans lequel se trouvent les tronçons radiaux des dents (25) et (26).

Le nombre de dents des parties statoriques correspond au nombre de pôles de l'aimant. Les dents des parties statoriques font face axialement aux faces de l'aimant avec une distance axiale « a » entre ces 2 parties. Cette distance axiale est fixée à l'assemblage du capteur et de la colonne de direction et est fixe pendant la vie du capteur.

L'imbrication radiale des dents (25) et (26) est limitée et fait partie d'une optimisation géométrique présentée dans les paragraphes suivants. De plus la hauteur radiale est préférentiellement égale à la hauteur radiale de l'aimant.

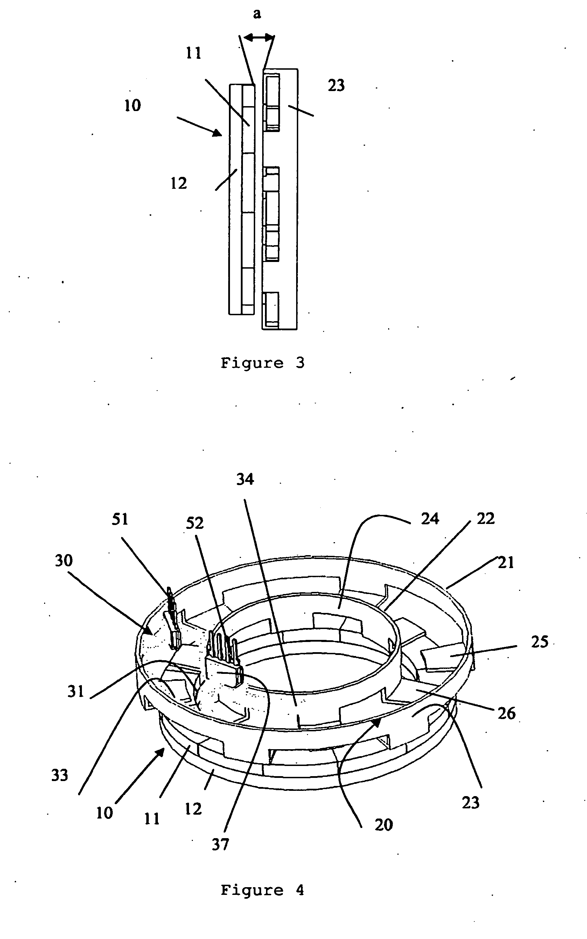

La figure 4 est une vue en perspective représentant un premier mode de réalisation du capteur selon l'invention, la partie statorique (20) répond aux règles géométriques énoncées dans le paragraphe suivant et la structure collectrice (30) fait apparaître les secteurs angulaires (33,34) à l'intérieur des stators et face aux couronnes de stators (23,24) suivant une direction radiale.

La structure rotorique (10) comporte un aimant (11) à 6 paires de pôles, monté sur une culasse (12), agissant sur deux stators (21,22) comprenant chacun 6 dents (25,26).

La hauteur d'imbrication des stators (21,22) est faible devant la longueur des dents (25,26) et leur largeur est grande devant leur épaisseur. Les critères géométriques relatifs au dimensionnement des stators sont donc respectés. Les dents (25,26) sont de forme trapézoïdale de façon à augmenter la section au pied de la dent. Cette forme trapézoïdale est particulièrement intéressante dans le cas de notre design optimisé.

En effet, les épaisseurs de dents étant volontairement très réduites, cet élargissement permet de conserver une section suffisante au passage du flux pour éviter la saturation dans le pied de dent.

De plus, le fait de raccourcir les dents permet de réaliser cet élargissement de la base des dents sans générer de flux de fuites parasites entre les flancs latéraux (28,29) des dents opposées.

Par ailleurs l'aimant multipolaire (11) est dimensionné en respectant une largeur radiale proche de celle des dents (25,26), offrant alors le meilleur compromis entre la sensibilité du capteur et le volume d'aimant.

Cette vue présente également une première solution de collection du flux, basée sur deux secteurs angulaires annulaires (33,34) inscrits à l'intérieur des couronnes de stators (33,34), et prolongés de deux branches pliées (35,36) qui permettent de ramener le flux à l'intérieur de deux entrefers de mesure (41,42) dans lesquels sont placées deux sondes de Hall (51,52) soudées sur un circuit imprimé, de façon à bénéficier d'une redondance de la mesure.

Au travers de ce mode de réalisation particulier, nous allons décrire précisément les formes et les dimensions d'un capteur dimensionné pour réaliser une mesure sur une course de plus ou moins huit degrés d'un arbre de torsion équipant une colonne de direction.

Le capteur se compose toujours des trois structures collectrice (30), statorique (20) et rotorique (10), cette dernière étant composée d'un aimant à 6 paires de pôles (11) de hauteur 6 mm, aimantés axialement pour former une bague de d'épaisseur 2mm, de diamètre intérieur 34 mm et de diamètre extérieure 46 mm, montée sur une culasse cylindrique (12) de même diamètre que l'aimant.

La structure statorique (20) comporte deux stators (21,22) montés en vis-à-vis et décalés angulairement d'un angle correspondant au pas polaire de l'aimant, à savoir de trente degrés.

Chacun de ces stators est constitué d'une couronne circulaire (23,24) prolongée sur sa partie intérieure de 6 dents (25,26) se présentant comme des portions de cylindre de hauteur 6 mm, orientées radialement de manière à collaborer avec les faces des aimants constituant la première structure rotorique (10).

Les dents font apparaître une largeur angulaire vue de l'axe du capteur qui est croissante de façon à augmenter la section de passage du flux dans le pied de dent sachant que l'épaisseur de la feuille de tôle utilisée est de 0.6 mm.

On notera également que la largeur angulaire de l'arc intérieur de la dent vue de l'axe du stator est de 23° comparé au 16° de course, ainsi cette géométrie de dent se distingue de l'art antérieur par une largeur importante mais une longueur et une épaisseur faibles.

Les deux stators (21,22) sont imbriqués sur une distance de 3 mm de sorte que la distance inter stator, entre les deux couronnes (23,34), atteint 9mm.

De plus les secteurs angulaires (33,34) sont dimensionnés de façon à recouvrir les parties annulaires des couronnes de collecteurs (23,24) et ce recouvrement assure l'insensibilité au débattement axial de la partie statorique (20) comme il a été expliqué auparavant.

À cet effet, le collecteur (33, 34) présente une longueur angulaire et une hauteur axiale déterminée par que l'espace compris entre ce collecteur et la partie tubulaire de la partie statorique (23, 24) correspondante ne varie pas, quelle que soit la position angulaire et axiale relative des deux structures. Cela permet de garantir une perméance magnétique indépendante des tolérances de positionnement.

Bien entendu cette insensibilité est vraie en dessous d'une certaine limite de décalage axial des deux structures.

Cette limite est définie par la différence de la hauteur axiale des parties annulaires statoriques (23,24) avec la hauteur axiale des secteurs angulaires (33,34).

Ce dimensionnement conduit donc à une insensibilité au décalage axial de la structure statorique (20) par rapport à la structure collectrice (30) tant que celui-ci reste inférieur à +/- 0.5 mm.

Deux branches (35,36) de largeur 3 mm prolongent les secteurs angulaires (33,34) et permettent de refermer le flux dans un entrefer de mesure (40) de hauteur 1.45 mm situé axialement à l'intérieur des stators (21,22) et dans lequel un élément magnéto-sensible (50) est placé et maintenu par un circuit imprimé.

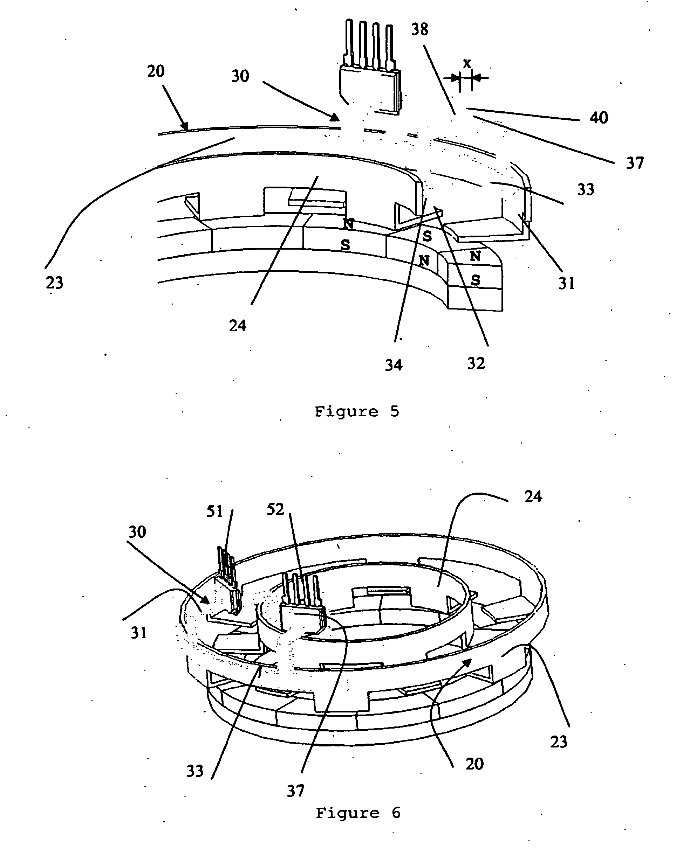

La figure 5 est une vue qui représente la troisième structure magnétique du capteur. Il s'agit de la structure collectrice (30) fixe qui permet de collecter le flux sur les couronnes de stators (23,24) et de le concentrer dans l'entrefer de mesure (40).

Cette structure est constituée de deux pièces (31,32) formées chacune d'une portion d'anneau concentrique (33,34), qui est conçue apte à opérer un échange de flux entre stators et collecteurs dans la direction radiale du capteur.

Les collecteurs (31,32) possèdent des secteurs angulaires (33,34) dont la hauteur axiale est plus petite que celle des couronnes de stators (23,24) et permettent de tolérer un défaut de jeu axial entre la structure statorique (20) et la structure collectrice (30).

Les pièces collectrices (31,32) présentent un décalage important entre les portions annulaires (33,34) et les facettes (37,38) constituant l'entrefer de mesure (40).

Cette particularité permet de limiter les fuites entre les parties collectrices (33,34) de flux qui restent éloignées, et de conserver un entrefer (40) de largeur (x) réduite pour concentrer au maximum le flux et accroître la sensibilité du capteur.

Au final, la structure magnétique de collection se distingue de l'art antérieur par le fait que les secteurs angulaires de collection (33,34) sont conçus aptes à opérer un transfert de flux radial, qu'ils sont totalement inscrits à l'intérieur des couronnes de stators (23,24) afin d'offrir une perméance indépendante de la position axiale relative des deux structures (20) et (30), et enfin qu'ils possèdent un coude prononcé générant un décalage sensible entre secteurs angulaires (33,34) et les faces (37,38) formant l'entrefer de mesure (40).

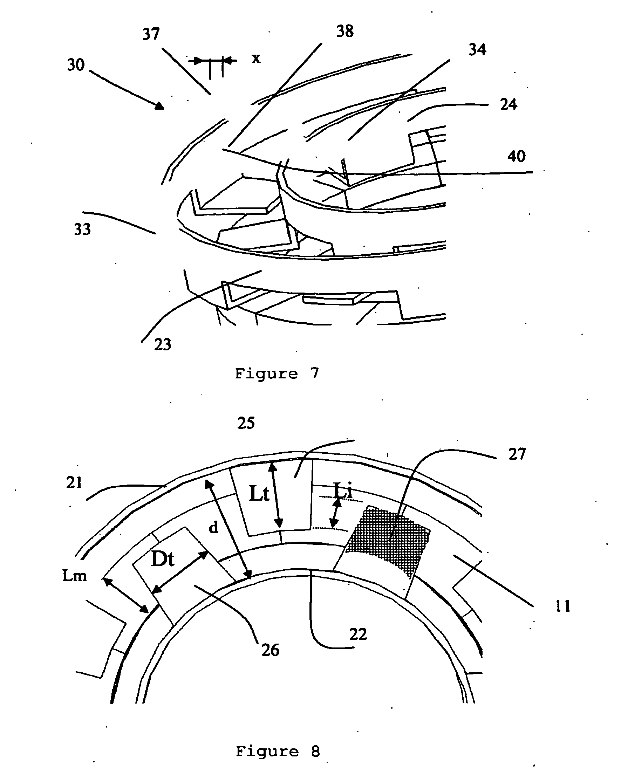

Les figures 6 et 7 présentent une variante des figures 4 et 5 et font apparaître un mode de réalisation dans lequel les secteurs annulaires (33,34) des pièces collectrices de flux (31,32) sont placés à l'extérieur des stators (21,22).

Cette localisation extérieure permet d'améliorer la sensibilité du capteur en limitant les fuites apparaissant entre les deux portions annulaires (33) et (34), pour concentrer davantage le flux dans l'entrefer de mesure (40).

Cette solution présente, d'une part, un gain sur la quantité de flux collecté, ce qui se traduit par un gain de sensibilité du capteur, et, d'autre part, un intérêt vis-à-vis de la tolérance du capteur aux défauts de battement axial des stators (23,24), lesquelles peuvent alors être fabriquées avec des tolérances géométriques moins serrées et à moindre coût.

La figure 8 est un schéma qui correspond à une vue de dessus faisant apparaître l'aimant (11) ainsi que des deux stators (21,22) comprenant des dents radiales imbriquées (25,26).

Ce schéma fait apparaître que les dents ne se prolongent pas radialement jusqu'au second stator et que leur largeur (Dt) est proche de leur longueur (Lt)

Ces spécificités géométriques permettent de réduire les épaisseurs de dents ainsi que celle des collecteurs pour aboutir à un capteur performant et peu coûteux.

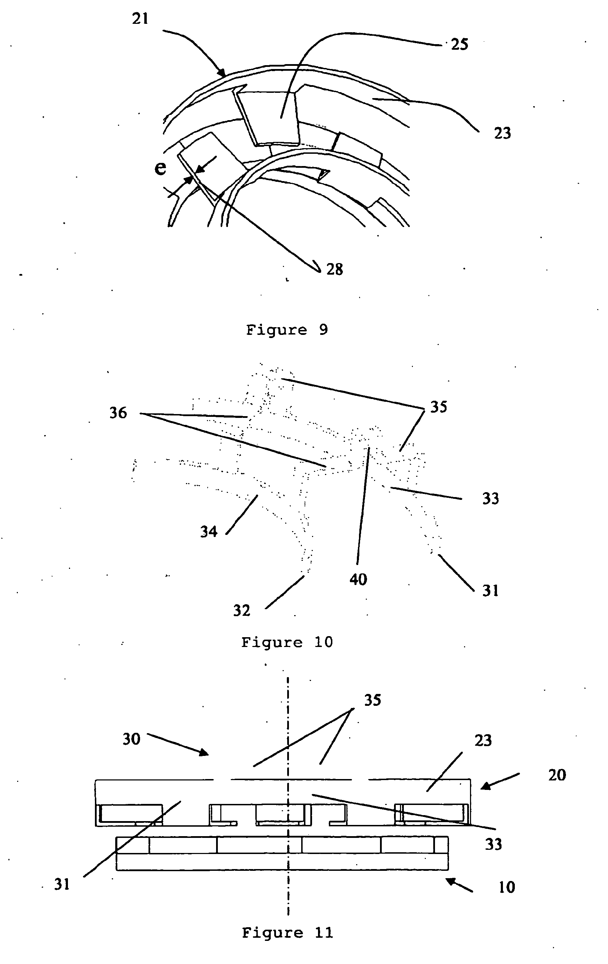

La figure 9 associée à la figure 8 montre une vue en perspective d'une dent de stator (25), de façon à faire apparaître l'épaisseur des dents (e) et la surface latérale des dents (28) dont il est question dans les paragraphes suivants.

Dans la configuration telle que représentée par ces deux figures 8 et 9, il apparaît que le rapport de la surface de dent utile (27) en vis-à-vis de l'aimant (11) avec la surface latérale de fuites entre dent (28) est important, il vérifie la relation exprimée dans les chapitres précédents, à savoir un ratio supérieur à 5.

On notera que la hauteur radiale Lm de l'aimant (11) est sensiblement égale à la hauteur radiale Lt des dents (25,26) et donc nettement inférieur à la distance inter stators notée (d).

Cette vue fait apparaître les différents paramètres géométriques à prendre en compte dans le dimensionnement des stators.

On note :

- Lt : la longueur radiale des dents de stator, de l'extrémité jusqu'à la surface intérieure de la couronne.

- Li : l'étendue radiale sur laquelle les stators pénètrent l'un dans l'autre ou encore la hauteur d'imbrication des dents.

- Lm : la largeur radiale de l'aimant.

- Dt : la largeur angulaire moyenne de dent calculée comme étant la valeur moyenne des longueurs des arcs formés en extrémité et à la base de la dent.

- e : l'épaisseur des dents dans la direction axiale au stator.

Ces paramètres permettent de définir un rapport entre la surface active et la surface de fuite des dents, rapport qui permet de définir une relation caractérisante du capteur proposé.

Les figures 10, 11 et 12 font apparaître un mode de réalisation pour les secteurs angulaires (33,34) des pièces collectrices de flux (31,32), qui sont placés à l'extérieur des stators (21,22).

Cette localisation extérieure permet d'améliorer la sensibilité du capteur en limitant les fuites apparaissant entre les deux portions annulaires (33) et (34), pour concentrer davantage le flux dans l'entrefer de mesure (40).

Cette solution présente, d'une part, un gain sur la quantité de flux collecté, ce qui se traduit par un gain de sensibilité du capteur, et d'autre part, un intérêt vis-à-vis de la tolérance du capteur aux défauts de battement axial et radial des stators (23,24), lesquelles peuvent alors être fabriquées avec des tolérances géométriques moins serrées et à moindre coût.

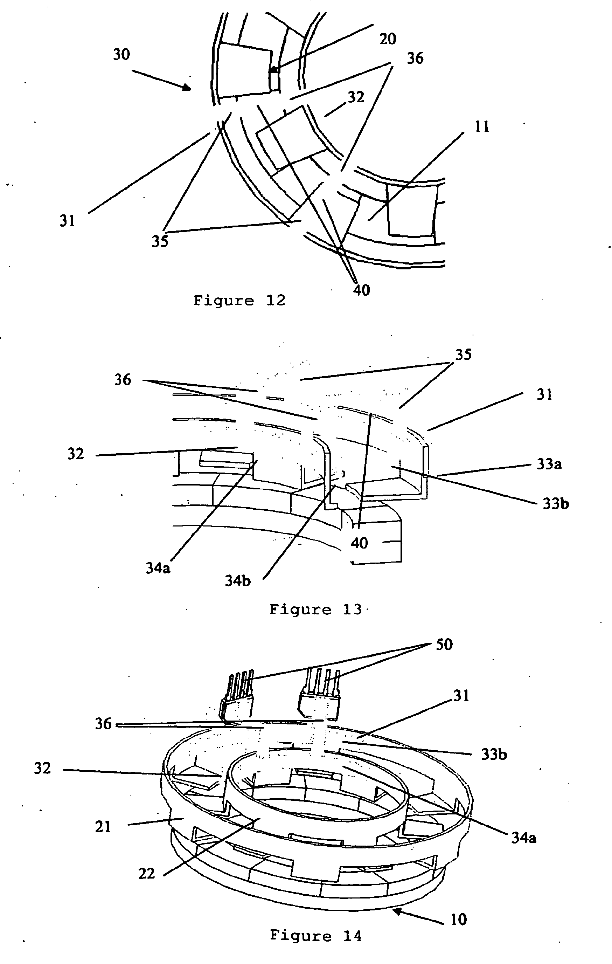

Les figures 13 et 14 représentent un second mode de réalisation de la solution proposée, dans laquelle apparaît une structure collectrice comprenant 4 portions annulaires (33a) (33b) (34a) et (34b) pour concentrer davantage de flux dans l'entrefer de mesure. Les 2 paires collectrices (31) et (32) ont chacune deux portions annulaires placées à l'intérieur et l'extérieur des stators (21) et (22). Comme dans la figure précédente, les pièces collectrices de flux (31,32) se présentent sous la forme de secteurs circulaires (33a, 33b, 34a, 34b) qui ont une hauteur axiale plus petite ou plus grande que le secteur annulaire des stators (23) et (24) pour être insensible au débattement axial du capteur.

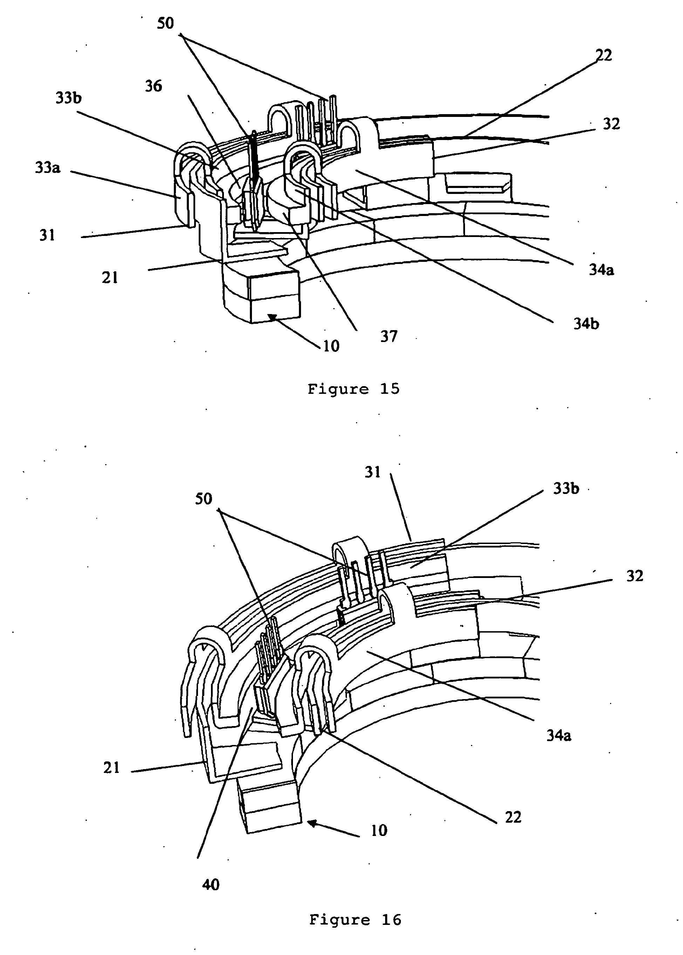

Les figures 15 et 16 présentent une variante de la solution présentée aux figures 11 et 12. Cette solution se différencie de la précédente par la présence non plus de deux entrefers de mesure mais d'un unique entrefer (40) situé entre les secteurs annulaires (36) et (37). Deux sondes de Hall ou plus peuvent être insérées dans cet entrefer de mesure. Les secteurs (36) et (37), définissant l'entrefer de mesure, ont un angle identique ou plus faible que l'angle du secteur annulaire respectivement (33b) et (34b). Cette solution permet ainsi un placement plus aisé des sondes de Hall dans leur entrefer de mesure.

**Revendications**

**1.** Capteur de position, notamment destiné à la détection de la torsion d'une colonne de direction, constitué d'une première structure magnétique rotorique (10) comprenant une pluralité d'aimants orientés axialement et d'une seconde structure statorique (20) comprenant "deux station (21,22) formés de" deux couronnes (23, 24) concentrique prolongées de dents (25, 26) orientéees radialement, les "stations (21,22)" présentant des dents imbriquées, ledit capteur comprenant une troisième structure collectrice (30) constituée de deux pièces de fermeture de flux (31,32) dont l'une au moins est fixe, lesdites deux pièces de fermeture définissant au moins un entrefer (40) dans lequel est placé au moins un élément magnéto-sensible (50) **caractérisé en ce que** ladite structure rotorique (10) présente une forme sensiblement discale et est constituée par une culasse ferromagnétique supportant ladite pluralité d'aimants.

2. Capteur de position selon la revendication 1, **caractérisé en ce que** les pièces de fermeture de flux (31,32) et les couronnes de stators (23,24) définissent entre elles un espace de dimension constante afin de définir une perméance magnétique indépendante de la position axiale et angulaire relative des deux structures (20) et (30).

3. Capteur de position, selon la revendication 1, **caractérisé en ce que** la structure collectrice (30) comporte deux portions annulaires (33,34) prévues apte à opérer un transfert de flux radial avec les couronnes de stators (23,24) et au moins deux branches de fermeture (35,36) permettant un décalage sensible, entre les faces (33,34) en regard des couronnes de stators (23,24), et les faces (37,38) délimitant l'entrefer de mesure (40), défini par la relation mathématique :

$$\frac{\text{Distance InterStators}}{\text{Entrefer de mesure}} \geq 4$$

où l'entrefer est défini par la distance minimale entre les faces (37,38) des collecteurs (31,32) et où la distance inter stators est définie par la distance entre les faces intérieures des couronnes (23,24) des stators (21,22).

4. Capteur de position selon la revendication 1 ou 2, **caractérisé en ce que**, les dents des stators (25,26) respectent les critères géométriques suivants :

$$\frac{Lt \times Dt}{Li \times e} \geq 5$$

où :

    • Lt désigne la longueur de dents de stators depuis l'extrémité jusqu'à la face intérieure de la couronne,
    • Dt désigne la largeur moyenne des dents calculée comme étant la valeur moyenne des longueurs des arcs formés à l'extrémité et à la base de la dent,
    • Li désigne l'imbrication des dents de stators c'est-à-dire l'étendue radiale sur laquelle les stators pénètrent l'un dans l'autre, et
    • e désigne l'épaisseur de la feuille de métal constituant les dents de stators.

5. Capteur de position selon l'une quelconque des revendications précédentes, **caractérisé en ce que** la structure de collection de flux (30) est réalisée au moyen de deux secteurs angulaires semi-annulaires (33,34) situés radialement à l'extérieur des couronnes stators (23,24), qui permettent de conduire le flux jusqu'à au moins un entrefer de mesure (41,42) comprenant au moins un élément magnéto-sensible (51,52).

6. Capteur de position selon l'une quelconque des revendications précédentes, **caractérisé en ce que** les dents de stators (25,26) ont une largeur croissante de l'extrémité vers la base.

7. Capteur de position selon l'une quelconque des revendications précédentes, **caractérisé en ce que** la structure collectrice (30) est composée de secteurs angulaires (33,34) dont la largeur angulaire de l'arête intérieure vue de l'axe du capteur, est égale à un multiple du pas polaire angulaire de l'aimant (11).

8. Capteur de position selon l'une quelconque des revendications précédentes, **caractérisé en ce que** les pièces de fermeture du flux (31,32) comportent des secteurs annulaires (33,34) s'étendant sur 360°.

9. Capteur de position selon l'une au moins des revendications précédentes, **caractérisé en ce que** l'entrefer de mesure (40) est apte à recevoir un circuit intégré unique (50) comportant deux éléments magnéto-sensibles distincts.

10. Capteur de position selon l'une au moins des revendications précédentes, **caractérisé en ce que** l'aimant (11) possède une largeur radiale sensiblement égale à la longueur des dents de stators (25,26).

11. Capteur de position selon la revendication 1, **caractérisé en ce que** ladite structure collectrice de flux (30) comprend au moins un premier secteur angulaire interne (34), présentant une forme semi-tubulaire couplée magnétiquement avec la surface extérieure de la couronne interne (24) et au moins un second secteur angulaire interne (33), présentant une forme semi-tubulaire couplée magnétiquement avec la surface interne de la couronne externe (33), l'un au moins desdits secteurs angulaire (33, 34) épousant sans frottement mécanique de la surface de la couronne (23, 44) adjacente, **en ce qu'**au moins un élément magnéto-sensible est couplé magnétiquement avec un prolongement dudit premier secteur angulaire (33) et avec un prolongement dudit second secteur angulaire (34).

12. Capteur de position selon la revendication 1, **caractérisé en ce que** ladite structure collectrice de flux (30) comprend au moins un premier secteur angulaire interne (34), présentant une forme semi-tubulaire couplée magnétiquement avec la surface interne de la couronne interne (24) et au moins un second secteur angulaire interne (33), présentant une forme semi-tubulaire couplée magnétiquement avec la surface externe de la couronne externe (23), l'un au moins desdits secteurs angulaire (33, 34) épousant sans frottement mécanique de la surface de la couronne (23, 24) adjacente, **en ce qu'**au moins un élément magnéto-sensible est couplé magnétiquement avec un prolongement dudit premier secteur angulaire (33) et avec un prolongement dudit second secteur angulaire (34).

13. Capteur de position selon la revendication 10 ou 11, **caractérisé en ce que** chacun desdits secteurs angulaire (23, 24) est prolongé par une patte (35, 36) s'étendant perpendiculairement au plan radial, l'une des extrémités prolongeant le secteur angulaire correspondant respectivement (23, 24), et l'autre extrémité étant en regard d'une de faces de l'élément magnéto-sensible pour assurer un couplage magnétique.

14. Capteur de position selon la revendication 11, **caractérisé en ce que** lesdites pattes (35, 36) sont coudées pour rapprocher les extrémités des faces opposées de l'élément magnéto-sensible.

15. Capteur de position selon la revendication 1, **caractérisé en ce que** ladite structure collectrice de flux (30) comprend au moins un premier secteur angulaire (33, 34), présentant une forme semi-tubulaire couplée magnétiquement avec la surface interne d'une part et la surface externe d'autre part de la couronne (23, 24) mobile dans le canal semi-tubulaire formé dans ledit secteur angulaire.

16. Capteur de position selon la revendication 1, **caractérisé en ce qu'**il comprend un ensemble d'au moins deux éléments magnéto-sensibles couplé avec au moins une structure collectrice de flux (30).

**Claims**

1. A position sensor, more particularly intended for detecting the torsion of a steering column, composed of a first rotor magnetic structure (10) including a plurality of axially oriented magnets and of a second stator structure (20) including two stators (21, 22) composed of two concentric rings (23, 24) lengthened by radially oriented teeth (25, 26), with the stators (21, 22) having interlocking teeth, with said sensor including a third collector structure (30) composed of two flux closing parts (31, 32) at least one of which is fixed, with said two closing parts defining at least one air gap (40) wherein is positioned at least one magneto-sensitive element (50) **characterized in that** said rotor structure (10) has a substantially disc shape and is composed of a ferromagnetic yoke supporting said plurality of magnets.

2. A position sensor according to claim 1, **characterised in that** the flux closing parts (31, 32) and the stator rings (23, 24) define there between a space having constant dimensions so as to define a magnetic permeance independent of the relative axial and angular position of the two structures (20) and (30).

3. A position sensor according to claim 1, **characterised in that** the collector structure (30) includes tow annular portions (33, 34) able to perform a radial flux transfer with the stator rings (23, 24) and at least two closing branches (35, 36) enabling a visible
shifting, between the faces (33, 34) opposite the stator rings (23, 24), and the faces (37, 38) delimiting the measuring air gap (40), defined by the following mathematical relationship:

$$\underline{\text{Interstator space}} \geq 4$$

$$\underline{\text{Measuring air gap}}.$$

where the air gap is defined by the minimum distance between the faces (37, 38) of the collectors (31, 32) and where the interstator space is defined by the distance between the inner faces of the stator (21, 22) rings (23, 24).

4. A position sensor according to claim 1 or 2, **characterised in that** the stator (25, 26) teeth comply with the following geometric criteria:

$$\underline{\text{LtxDt}} \geq 5$$

$$\underline{\text{Lixe}}$$

where:

. Lt is the length of the stator teeth from the end to the inner face of the crown,
. Dt is the average width of the teeth calculated as the average value of the length of the arches formed at the end and at the foot of the tooth,
. Li is the interlocking of the stator teeth, i.e. the radial space whereon the stators are interlocked, and
. e is the thickness of the metal sheet composing the stator teeth.

5. A position sensor according to any one of the preceding claims, **characterized in that** the flux collector structure (30) is provided by two semi-annular angular sectors (33, 34) positioned radially outside the stator rings (23, 24), which make it possible to lead the flux up to at least one measuring air gap (41, 42) including at least one magneto-sensitive element (51, 52).

6. A position sensor according to any one of the preceding claims, **characterized in that** the stator teeth (25, 26) have an increasing width from the end to the foot.

7. A position sensor according to any one of the preceding claims, **characterized in that** the collector structure (30) is composed of angular sectors (33, 34) wherein the angular width of the inner edge, as seen from the sensor axis, is equal to a multiple of the angular pole pitch of the magnet (11).

8. A position sensor according to any one of the preceding claims, **characterized in that** the flux closing parts (31, 32) include annular sectors (33, 34) extending over 360°.

9. A position sensor according to at least one of the preceding claims, **characterized in that** the measuring air gap (40) is able to receive a single integrated circuit (50) including two distinct magneto-sensitive elements.

10. A position sensor according to at least one of the preceding claims, **characterized in that** the magnet (11) has a radial width substantially equal to the length of the stator teeth (25, 26).

11. A position sensor according to claim 1, **characterized in that** said flux collector structure (30) includes at least one first inner angular sector (34) having a semi-tubular shape magnetically coupled with the outer surface of the inner ring (24) and at least one second inner angular sector (33), having a semi-tubular shape magnetically coupled with the inner surface of the outer ring (33), with at least one of said angular sectors (33, 34) matching, without any mechanical friction, the surface of the adjacent ring (23, 24), **in that** at least one magneto-sensitive element is magnetically coupled with an extension of said first angular sector (33) and with an extension of said second angular sector (34).

12. A position sensor according to claim 1, **characterized in that** said flux collector structure (30) includes at least one first inner angular sector (34), having a semi-tubular shape magnetically coupled with the inner surface of the inner ring (24) and at least a second inner angular sector (33), having a semi-tubular shape magnetically coupled with the outer surface of the outer ring (23), with at least one of said angular sectors (33, 34) matching, without any mechanical friction, the surface of the adjacent ring (23, 24), **in that** at least one magneto-sensitive element is magnetically coupled with an extension of said first angular sector (33) and with an extension of said second angular sector (34).

13. A position sensor according to claim 10 or 11, **characterized in that** each of said angular sectors (23, 24) is lengthened by a lug (35, 36) extending perpendicularly to the radial plane, with one of the ends extending the respectively corresponding angular sector (23, 24) and the other end being opposite one of the faces of the magneto-sensitive element to provide a magnetic coupling.

14. A position sensor according to claim 11, **characterized in that** said lugs (35, 36) are bent to have the ends of the opposite faces of the magneto-sensitive elements positioned closer to each other.

15. A position sensor according to claim 1, **characterized in that** sais flux collector structure (30) having a semi-tubular shape magnetically coupled with the inner surface, on the one hand and the outer surface, on the other hand, of the ring (23, 24) moveable in the semi-tubular channel formed in said angular sector.

16. A position sensor according to claim 1, **characterized in that** it includes a set of at least two magneto-sensitive elements coupled with at least one flux collector structure (30).

**Patentansprüche**

1. Positionssensor, der insbesondere zur Erfassung der Verdrehung einer Lenkstange bestimmt ist, aus einer ersten magnetischen Rotorstruktur (10), die eine Vielzahl von axial ausgerichteten Magneten umfasst und einer zweiten Statorstruktur (20) gebildet wird, die zwei Statoren (21, 22) umfasst, die aus zwei konzentrischen Kränzen (23, 24) gebildet werden, die durch radial ausgerichtete Zähne (25, 26) verlängert werden, wobei die zwei Statoren (21, 22) ineinander eingreifende Zähne aufweisen, wobei der genannte Sensor eine dritte Sammelstruktur (30) umfasst, die aus zwei Flussverschlussstücken (31, 32) gebildet wird, von denen wenigstens eine fest ist, wobei die genannten zwei Verschlussstücke wenigstens einen Luftspalt (40) definieren, in dem wenigstens ein magnetisch-sensibles Element (50) platziert ist, **dadurch gekennzeichnet, dass** die genannte Rotorstruktur (10) eine deutlich scheibenartige Form aufweist und durch einen ferromagnetischen Zylinderkopf gebildet wird, der die genannte Vielzahl von Magneten stützt.

2. Positionssensor gemäß Anspruch 1, **dadurch gekennzeichnet, dass** die Flussverschlussstücke (31, 32) und die Statorkronen (23, 24) untereinander einen Raum konstanter Abmessung definieren, um eine magnetische Durchlässigkeit zu definieren, die unabhängig von der axialen Position und winkelförmig relativ zu den zwei Strukturen (20) und (30) ist.

3. Positionssensor gemäß Anspruch 1, **dadurch gekennzeichnet, dass** die Sammelstruktur (30) zwei ringförmige Abschnitte (33, 34) umfasst, die vorgesehen sind, um geeignet zu sein, einen radialen Transferfluss mit den Statorkronen (23, 24) zu arbeiten, und wenigstens zwei Verschlusszweige (35, 36), die eine deutliche Verschiebung zwischen den Seiten (33, 34) gegenüber den Statorkronen (23, 24) und den Seiten (37, 38) erlauben, die den Mess-Luftspalt (40) begrenzen, der von dem mathematischen Verhältnis;

$$\frac{\text{Entfernung zwischen den Statoren}}{\text{Mess-Luftspalt}} \geq 4$$

definiert wird, bei dem der Luftspalt durch die minimale Entfernung zwischen den Flächen (37, 38) der Sammler (31, 32) definiert wird und bei dem die Entfernung zwischen den Statoren durch die Entfernung zwischen den inneren Flächen der Kränze (23, 24) der Statoren (21, 22) definiert wird.

4. Positionssensor gemäß Anspruch 1 oder 2, **dadurch gekennzeichnet, dass** die Zähne der Statoren (25, 26) die folgenden geometrischen Kriterien einhalten:

$$\frac{Lt \times Dt}{Li \times e} \geq 5$$

wobei:

* Lt die Länge der Statorzähne ab dem Ende bis zur inneren Seite des Kranzes bezeichnet,
* Dt die durchschnittliche Breite der Zähne bezeichnet, die als der durchschnittliche Wert der Längen der Bögen berechnet wird, die am Ende und an der Basis des Zahns gebildet werden,
* Li das Eingreifen der Statorzähne bezeichnet, d. h. die radiale Ausdehnung, auf der die Statoren ineinander eindringen, und
* e die Dicke der Metallfolie bezeichnet, die die Statorzähne bilden.

5. Positionssensor gemäß einem der voranstehenden Ansprüche, **dadurch gekennzeichnet, dass** die Flusssammelstruktur (30) anhand von zwei halbringförmigen, winkelförmigen Abschnitten (33, 34) realisiert wird, die sich radial an der Außenseite der Statorkränze (23, 24) befinden, die es erlauben, den Fluss wenigstens bis zu einem Mess-Luftspalt (41, 42) zu führen, der wenigstens ein magnetisch-sensibles Element (51, 52) umfasst.

6. Positionssensor gemäß einem der voranstehenden Ansprüche, **dadurch gekennzeichnet, dass** die Statorzähne (25, 26) eine ansteigende Breite des Endes zur Basis haben.

7. Positionssensor gemäß einem der voranstehenden Ansprüche, **dadurch gekennzeichnet, dass** die Sammelstruktur (30) aus winkelförmigen Abschnitten (33, 34) gebildet wird, deren winkelförmige Breite der inneren Kante von der Achse des Sensors aus gesehen gleich einem Vielfachen des winkelförmigen polaren Schrittes des Magneten (11) ist.

8. Positionssensor gemäß einem der voranstehenden Ansprüche, **dadurch gekennzeichnet, dass** die Flussverschlussteile (31, 32) ringförmige Sektoren (33, 34) umfassen, die sich über 360° erstrecken.

9. Positionssensor gemäß wenigstens einem der voranstehenden Ansprüche, **dadurch gekennzeichnet, dass** der Mess-Luftspalt (40) geeignet ist, einen einzigartigen integrierten Schaltkreis (50) aufzunehmen, der zwei unterschiedliche magnetisch-sensible Elemente umfasst.

10. Positionssensor gemäß wenigstens einem der voranstehenden Ansprüche, **dadurch gekennzeichnet, dass** der Magnet (11) eine radiale Breite umfasst, die deutlich gleich der Länge der Statorzähne (25, 26) ist.

11. Positionssensor gemäß Anspruch 1, **dadurch gekennzeichnet, dass** die genannte Flusssammelstruktur (30) wenigstens einen ersten internen winkelförmigen Sektor (34) umfasst, der eine halb-röhrenförmige Form aufweist, die magnetisch mit der äußeren Seite des interne Kranzes (24) gekoppelt ist, und wenigstens einen zweiten internen winkelförmigen Sektor (33), der eine halb-röhrenförmige Form aufweist, die magnetisch mit der internen Fläche des externen Kranzes (33) gekoppelt ist, wobei wenigstens einer der genannten winkelförmigen Sektoren (33, 34) sich ohne mechanische Reibung der Fläche des anliegenden Kranzes (23, 44) anschmiegt, dass wenigstens ein magnetisch-sensibles Element magnetisch mit einer Verlängerung des genannten ersten winkelförmigen Abschnitts (33) und mit einer Verlängerung des genannten zweiten winkelförmigen Abschnitts (34) gekoppelt ist.

12. Positionssensor gemäß Anspruch 1, **dadurch gekennzeichnet, dass** die genannte Flusssammelstruktur (30) wenigstens einen ersten internen winkelförmigen Abschnitt (34) umfasst, der eine halbröhrenförmige Form aufweist, die magnetisch mit der internen Fläche des internen Kranzes (24) gekoppelt ist, und wenigstens einen internen winkelförmigen Abschnitt (33), der eine halbröhrenförmige Form aufweist, die magnetisch mit der externen Fläche des externen Kranzes (23) gekoppelt ist, wobei wenigstens einer der genannten winkelförmigen Abschnitte (33, 34) sich ohne mechanische Reibung der Fläche des anliegenden Kranzes (23, 24) anschmiegt, dass wenigstens ein magnetisch-sensibles Element magnetisch mit einer Verlängerung des genannten ersten winkelförmigen Abschnitts (33) und mit einer Verlängerung des genannten zweiten winkelförmigen Abschnitts (34) gekoppelt ist.

13. Positionssensor gemäß Anspruch 10 oder 11, **dadurch gekennzeichnet, dass** jeder der genannten winkelförmigen Sektoren (23, 24) durch eine Klaue (35, 36) verlängert wird, die sich lotrecht zur radialen Ebene erstreckt, wobei eines der Enden den jeweils entsprechenden winkelförmigen Abschnitt (23, 24) verlängert und das andere Ende sich gegenüber einer der Seiten des magnetisch-sensiblen Elements befindet, um eine magnetische Kopplung zu gewährleisten.

14. Positionssensor gemäß Anspruch 11, **dadurch gekennzeichnet, dass** die genannten Klauen (35, 36) abgewinkelt sind, um die Enden der gegenüberliegenden Seiten des magnetisch-sensiblen Elements anzunähern.

15. Positionssensor gemäß Anspruch 1, **dadurch gekennzeichnet, dass** die genannte Flusssammelstruktur (30) wenigstens einen ersten winkelförmigen Abschnitt (33, 34) umfasst, der eine halbröhrenförmige Form aufweist, die magnetisch mit der internen Fläche einerseits und der externen Fläche andererseits des mobilen Kranzes (23, 24) im halbröhrenförmigen Kanal gekoppelt ist, der in dem genannten winkelförmigen Abschnitt gebildet wird.

16. Positionssensor gemäß Anspruch 1, **dadurch gekennzeichnet, dass** er eine Struktur aus wenigstens zwei magnetisch-sensiblen Elementen umfasst, die mit wenigstens einer Flusssammelstruktur (30) gekoppelt ist.

Figure 1

Figure 2

Figure 3

Figure 4

Figure 5

Figure 6

Figure 7

Figure 8

Figure 9

Figure 10

Figure 11

Figure 12

Figure 13

Figure 14

Figure 15

Figure 16

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 0407718
- US 4984474 A
- DE 20305732
- GB 2379277 A
- US 2003233889 A
- DE 10222118
- FR 12845472
- US 4998084 A
- US 3585550 A
- US 4555685 A
- US 4835505 A